# EUROPEAN PATENT SPECIFICATION

(11) **EP 3 962 159 B1**
(45) Date of publication and mention of the grant of the patent: **25.06.2025**
(21) Application number: 19926100.9
(22) Date of filing: 26.04.2019
(51) Int. Cl.: H04W 72/232, H04L 1/1829, H04L 1/1867, H04W 72/0446, H04W 72/1268

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 02.03.2022
(73) Proprietor: NTT DOCOMO, INC., Chiyoda-ku Tokyo 100-6150 (JP)
(72) Inventor: TAKEDA, Kazuki, Tokyo 100-6150 (JP); YOSHIOKA, Shohei, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/018120
(87) International publication number: WO 2020/217514

(56) References cited:
- US-A1- 2019 075 589
- ZTE: "PUSCH enhancements for NR URLLC", vol. RAN WG1, no. Xi'an, China; 20190408 - 20190412, 3 April 2019 (2019-04-03), XP051707145, Retrieved from the Internet <URL:http://www.3gpp.org/ftp/tsg%5Fran/WG1%5FRL1/TSGR1%5F96b/Docs/R1%2D1904145%2Ezip> [retrieved on 20190403]
- PANASONIC: "On PUSCH enhancements for NR URLLC", 3GPP DRAFT; R1-1904188_PANASONIC_NR_URLLC_PUSCH_ENHANCEMENTS_VFINAL, vol. RAN WG1, 12 April 2019 (2019-04-12), Xi’an, China, pages 1 - 6, XP051707155
- ZTE: "PUSCH enhancements for NR URLLC", 3GPP DRAFT; R1-1904145 PUSCH ENHANCEMENTS FOR NR URLLC, vol. RAN WG1, 3 April 2019 (2019-04-03), Xi’an, China, pages 1 - 7, XP051707145
- QUALCOMM INCORPORATED: "PUSCH Enhancements for eURLLC", 3GPP DRAFT; R1-1905021 PUSCH ENHANCEMENTS FOR EURLLC, vol. RAN WG1, 3 April 2019 (2019-04-03), Xi’an, China, pages 1 - 5, XP051707363
- INTEL CORPORATION: "PUSCH enhancements for URLLC", 3GPP DRAFT; R1-1904307 INTEL - PUSCH_ENH, vol. RAN WG1, 3 April 2019 (2019-04-03), Xi’an, China, pages 1 - 5, XP051707183

## Description

### Technical Field

The present disclosure relates to user terminal and a radio communication method in a next-generation mobile communication system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In the existing LTE system (for example, 3GPP Rel. 8-14), user terminal (user equipment (UE)) controls transmission of an uplink shared channel (for example, physical uplink shared channel (PUSCH)) and reception of a downlink shared channel (for example, a physical downlink control channel (PDSCH)) based on downlink control information ((DCI).
US 2019/0075589 A1 discusses a system where a base station transmits parameters for a configured grant and a dynamic grant, wherein the parameters may indicate number of transmissions of transport blocks within a bundle of a configured grant and within a bundle of a dynamic grant.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (hereinafter, referred to as NR), it is considered to determine a time domain resource (for example, symbols) allocated to a downlink shared channel (for example, physical downlink control channel (PDSCH)) or an uplink shared channel (for example, physical uplink shared channel (PUSCH)) in a slot based on a value of a given field in downlink control information (DCI).

Further, in NR, performing repetition in UL transmission (for example, PUSCH) and DL transmission (for example, PDSCH) is also under study. For example, it is assumed that repetition is performed over a plurality of slots. Further, performing repetition in a given symbol unit (for example, a mini slot unit) in a slot (mini slot repetition) is also under study.

In this case, how to control the time domain resource allocated to the shared channel and the configuration of the repetition has not been sufficiently studied yet. From the viewpoint of improving the communication throughput, it is desirable to flexibly configure the configuration of the repetition according to the time domain resource allocated to the shared channel.

Therefore, an object of the present disclosure is to provide user terminal and a radio communication method capable of appropriately configuring repetition.

### Solution to Problem

The mentioned problems are solved by the subject-matter of the independent claims.

Further preferred embodiments are defined in the dependent claims.

User terminal according to an aspect includes: a reception section that receives information regarding one or more repetition factor candidates that are configured corresponding to a time domain resource allocated to a physical shared channel; and a control section that selects a specific repetition factor candidate based on a codepoint of a given field included in downlink control information used for scheduling the physical shared channel. Advantageous Effects of Invention

According to an aspect of the present disclosure, repetition can be appropriately configured.

### Brief Description of Drawings

Figs. 1A and 1B are diagrams illustrating examples of a PDSCH time domain allocation list and a PUSCH time domain allocation list.
Fig. 2 is a diagram illustrating an example of a case where repetition is applied.
Fig. 3 is a diagram illustrating an example of a correspondence relationship between a codepoint of a given field of DCI and a repetition factor candidate.
Figs. 4A and 4B are diagrams illustrating an example of a correspondence relationship between a repetition factor candidate configured for an SLIV, a codepoint of a given field of DCI, and a repetition factor candidate.
Fig. 5 is a diagram illustrating an example of a schematic configuration of a radio communication system according to one embodiment.
Fig. 6 is a diagram illustrating an example of a configuration of a base station according to one embodiment.
Fig. 7 is a diagram illustrating an example of a configuration of user terminal according to one embodiment.
Fig. 8 is a diagram illustrating an example of a hardware configuration of a base station and user terminal according to one embodiment.

### Description of Embodiments

In NR, it is considered that the user terminal (UE) determine a time domain resource (for example, one or more symbols) allocated to a downlink shared channel (also referred to as physical downlink shared channel (PDSCH)) or an uplink shared channel (also referred to as physical uplink shared channel (PUSCH)) based on a value of a given field (for example, time domain resource assignment or allocation (TDRA) field) in downlink control information (DCI).

### <PDSCH time domain resource allocation>

The size (the number of bits) of the TDRA field in the DCI (DL assignment, e.g., DCI format 1_0 or 1_1) used for PDSCH scheduling may be fixed or variable.

For example, the size of the TDRA field in DCI format 1_0 may be fixed to a given number of bits (for example, 4 bits). On the other hand, the size of the TDRA field in DCI format 1_1 may be the number of bits that varies depending on a given parameter (for example, 0 to 4 bits).

The given parameter used to determine the size of the TDRA field may be, for example, the number of entries in a list of time domain allocation with respect to the PDSCH (or downlink data) (PDSCH time domain allocation list).

For example, the PDSCH time domain allocation list may be, for example, the RRC control element "pdsch-TimeDomainAllocationList" or "PDSCH-TimeDomainResourceAllocationList". Further, the PDSCH time domain allocation list may be used to configure a time domain relationship between a PDCCH and the PDSCH. Further, each entry in the PDSCH time domain allocation list may be referred to as allocation information of a time domain resource with respect to the PDSCH (PDSCH time domain allocation information) or the like, and may be, for example, the RRC control element "PDSCH-TimeDomainResourceAllocation".

Further, the PDSCH time domain allocation list may be included in a cell-specific PDSCH parameter (for example, the RRC control element "pdsch-ConfigCommon") or may be included in a UE-specific parameter (UE-specific applied to a specific BWP) (for example, the RRC control element "pdsch-Config"). As described above, the PDSCH time domain allocation list may be cell-specific or UE-specific.

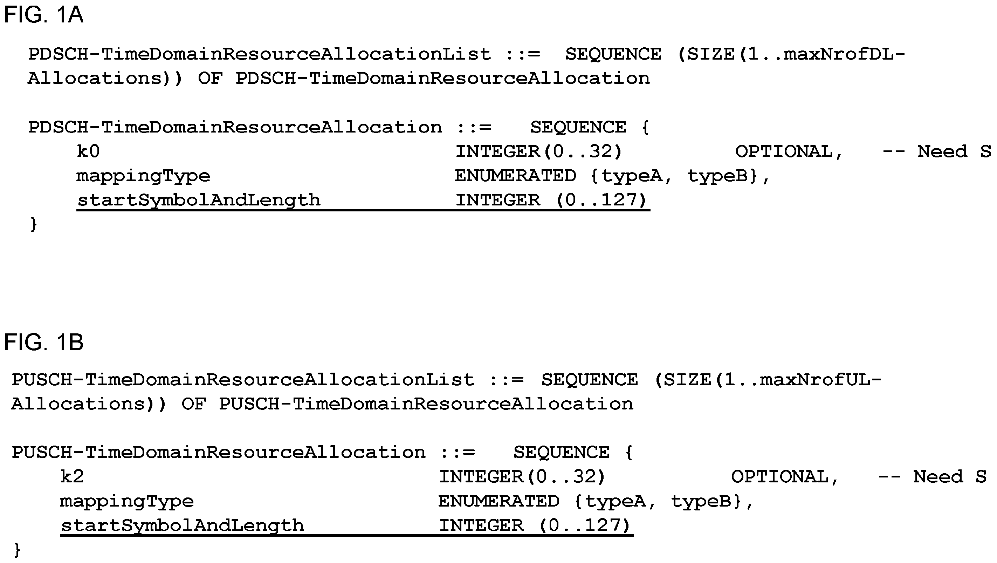

Fig. 1A is a diagram illustrating an example of the PDSCH time domain allocation list. As illustrated in Fig. 1A, each piece of PDSCH time domain allocation information in the PDSCH time domain allocation list may include at least one of information indicating time offset K0 (also referred to as k0, K₀, and the like) between the DCI and the PDSCH scheduled by the DCI (also referred to as offset information, K0 information, and the like), information indicating a mapping type of the PDSCH (mapping type information), and an index (start and length indicator (SLIV)) giving a combination of start symbol S and time length L of the PDSCH.

Alternatively, the given parameter used to determine the size of the TDRA field may be the number of entries of a default table (for example, default PDSCH time domain allocation A) for time domain allocation with respect to the PDSCH or the downlink data. The default table may be defined in advance in a specification. In each row of the default table, at least one of a row index, information indicating the position of a DMRS, the mapping type information, the K0 information, the information indicating the start symbol S of the PDSCH, and the information indicating the number of symbols L allocated to the PDSCH may be associated.

The UE may determine the row index (entry number or entry index) of a given table based on the value of the TDRA field in the DCI (for example, DCI format 1_0 or 1_1). The given table may be a table based on the PDSCH time domain allocation list or may be the default table.

The UE may determine the time domain resource (for example, a given number of symbols) allocated to the PDSCH in a given slot (one or a plurality of slots) based on at least one of the K0 information, the SLIV, the start symbol S, and the time length L defined in the row (or entry) corresponding to the row index.

Note that the K0 information may indicate the time offset K0 between the DCI and the PDSCH scheduled by the DCI by the number of slots. The UE may determine a slot for receiving the PDSCH by the time offset K0. For example, when receiving the DCI for scheduling the PDSCH in slot #n, the UE may determine the slot for receiving the PDSCH (allocated to the PDSCH) based on the number n of the slot and at least one of PDSCH subcarrier spacing µ_{PUSCH}, PDCCH subcarrier spacing µ_{PDCCH}, and the time offset K0.

### <PUSCH time domain resource allocation>

The size (the number of bits) of the TDRA field in the DCI (UL grant, e.g., DCI format 0_0 or 0_1) used for PUSCH scheduling may be fixed or variable.

For example, the size of the TDRA field in DCI format 0_0 may be fixed to a given number of bits (for example, 4 bits). On the other hand, the size of the TDRA field in DCI format 0_1 may be the number of bits that varies depending on a given parameter (for example, 0 to 4 bits).

The given parameter used to determine the size of the TDRA field may be, for example, the number of entries in a list of time domain allocation with respect to the PUSCH (or uplink data) (PUSCH time domain allocation list).

For example, the PUSCH time domain allocation list may be, for example, the RRC control element "pusch-TimeDomainAllocationList" or "PUSCH-TimeDomainResourceAllocationList". Further, each entry in the PUSCH time domain allocation list may be referred to as allocation information of a time domain resource with respect to the PUSCH (PUSCH time domain allocation information) or the like, and may be, for example, the RRC control element "PUSCH-TimeDomainResourceAllocation".

Further, the PUSCH time domain allocation list may be included in a cell-specific PUSCH parameter (for example, the RRC control element "pusch-ConfigCommon") or may be included in a UE-specific parameter (UE-specific applied to a specific bandwidth part (BWP)) (for example, the RRC control element "pusch-Config"). As described above, the PUSCH time domain allocation list may be cell-specific or UE-specific.

Fig. 1B is a diagram illustrating an example of the PUSCH time domain allocation list. As illustrated in Fig. 1B, each piece of PUSCH time domain allocation information in the PUSCH time domain allocation list may include at least one of information indicating time offset K2 (also referred to as k2, K₂, and the like) between the DCI and the PUSCH scheduled by the DCI (also referred to as offset information, K2 information, and the like), information indicating a mapping type of the PUSCH (mapping type information), and an index (start and length indicator (SLIV)) giving a combination of start symbol and time length of the PUSCH.

Alternatively, the given parameter used to determine the size of the TDRA field may be the number of entries of a default table (for example, default PUSCH time domain allocation A) for time domain allocation with respect to the PUSCH or the uplink data. The default table may be defined in advance in a specification. In each row of the default table, at least one of a row index, the mapping type information, the K2 information, the information indicating the start symbol S of the PUSCH, and the information indicating the number of symbols L allocated to the PUSCH may be associated.

The UE may determine the row index (entry number or entry index) of a given table based on the value of the TDRA field in the DCI (for example, DCI format 0_0 or 0_1). The given table may be a table based on the PUSCH time domain allocation list or may be the default table.

The UE may determine the time domain resource (for example, a given number of symbols) allocated to the PUSCH in a given slot (one or a plurality of slots) based on at least one of the K2 information, the SLIV, the start symbol S, and the time length L defined in the row (or entry) corresponding to the row index.

Note that the K2 information may indicate the time offset K2 between the DCI and the PUSCH scheduled by the DCI by the number of slots. The UE may determine a slot for transmitting the PUSCH by the time offset K2. For example, when receiving the DCI for scheduling the PUSCH in slot #n, the UE may determine the slot for transmitting the PUSCH (allocated to the PUSCH) based on the number n of the slot and at least one of PUSCH subcarrier spacing µ_{PUSCH}, PDCCH subcarrier spacing µ_{PDCCH}, and the time offset K2.

Meanwhile, in NR, application of repetition in data (for example, a physical shared channel) transmission has been studied. For example, a base station (network (NW), gNB) repeatedly transmits DL data (for example, downlink shared channel (PDSCH)) a given number of times. Alternatively, the UE repeatedly performs UL data (for example, uplink shared channel (PUSCH)) a given number of times.

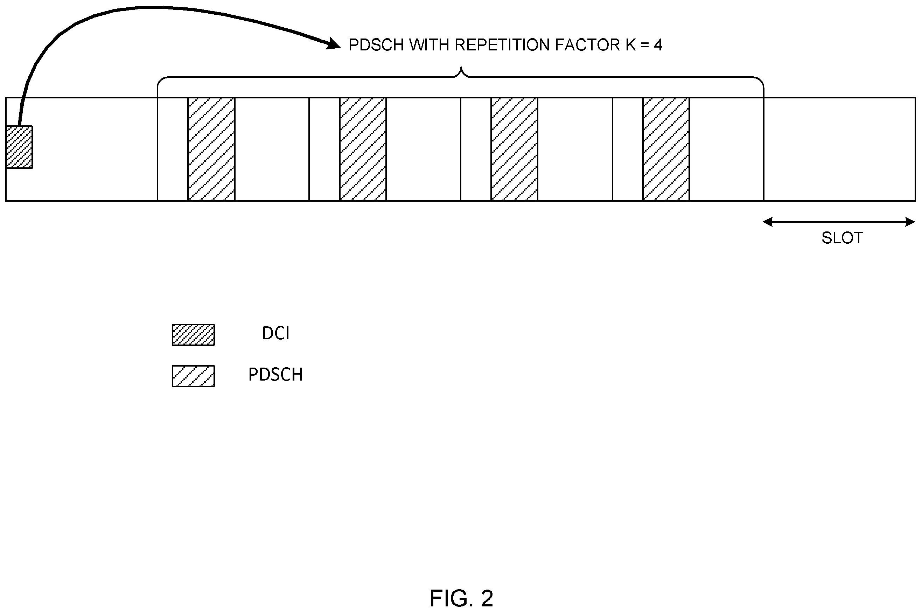

Fig. 2 is a diagram illustrating an example of repetition of a PDSCH. Fig. 2 illustrates an example in which a given number of PDSCH repetitions are scheduled by a single piece of DCI. The number of times of repetition is also referred to as repetition factor K or aggregation factor K.

In Fig. 2, the repetition factor K = 4, but the value of K is not limited to this. Further, an n-th repetition is also referred to as an n-th transmission occasion or the like and may be identified by a repetition index k (0 ≤ k ≤ K-1).

Further, although Fig. 2 illustrates repetition of the PDSCH, the repetition can also be applied to repetition of a dynamic grant-based PUSCH scheduled by the DCI or a configured grant-based PUSCH not scheduled by the DCI. Further, the repetition may be performed a plurality of times within one slot, may be performed in units of slots, or may be performed across slot boundaries.

For example, in Fig. 2, the UE receives information indicating the repetition factor K (for example, aggregationFactorUL or aggregationFactorDL) by higher layer layer signaling. In this case, the UE controls the repetition reception of each PDSCH or the repetition transmission of each PUSCH based on the semi-statically configured repetition factor K.

On the other hand, as described above, since a notification of the time domain resources (for example, start symbol and length) to which the PDSCH and the PUSCH are allocated is given by the DCI, the time domain resources of the PDSCH and the PUSCH may be dynamically changed. In such a case, when the same repetition factor K is applied to each PDSCH or PUSCH, there is a possibility that the repetition cannot be flexibly configured. For example, it is also conceivable that it is preferable to apply different repetition factors K when the length (L) of the PDSCH or PUSCH is 2 and 7.

The present inventors have focused on the point that it is desirable to flexibly configure the repetition factor according to the time domain resource (for example, start symbol and length) of the physical shared channel, and have conceived a control method of flexibly configuring the configuration of the repetition according to the time domain resource allocated to the shared channel.

Hereinafter, embodiments according to the present disclosure will be described in detail with reference to the drawings. Configurations described in each of the aspects may be applied individually or in combination. Note that the following description is applicable to both an UL physical shared channel (for example, PUSCH) and a DL physical shared channel (for example, PDSCH).

### (First Aspect)

In a first aspect, one or more repetition factor candidates are configured for a given time domain resource (or SLIV) of a physical shared channel, and a notification of a specific repetition factor candidate (for example, a repetition factor to be actually applied) is given to UE by using downlink control information.

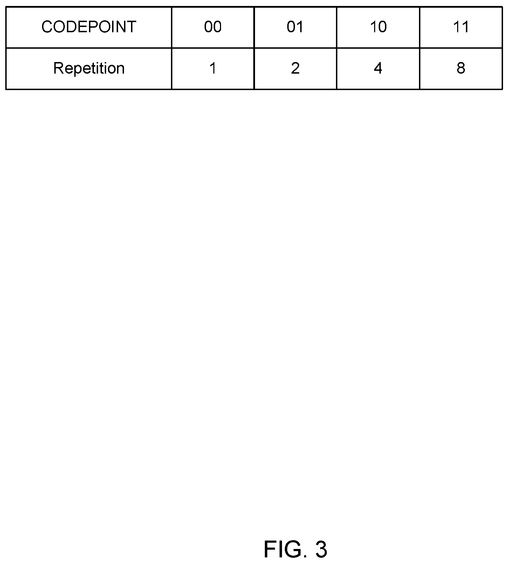

Fig. 3 illustrates an example of a repetition factor candidate that is configured corresponding to a given time domain resource (hereinafter, also referred to as SLIV). Here, four repetition factor candidates {R0, R1, R2, R3} (R0 = 1, R1 = 2, R2 = 4, R3 = 8) are configured for a given SLIV. The network (for example, a base station) may notify the UE of the information regarding the repetition factor candidate by using higher layer signaling.

The given SLIV may be all SLIVs or may be SLIV groups obtained by grouping based on at least one of the start symbol (S) and the length (L). Alternatively, the given SLIV may be an SLIV in which at least one of the start symbol (S) and the length (L) is different.

For example, the repetition factor candidates {R0, R1, R2, R3} may be commonly configured for all the SLIVs. The base station may notify the UE of the repetition factor to be actually applied from among the repetition factor candidates {R0, R1, R2, R3}.

For example, the base station may notify the UE of a specific repetition factor candidate by using a given field of downlink control information (DCI) instructing transmission or reception of a physical shared channel (for example, used for scheduling the physical shared channel). The given field may be a field different from the field designating the SLIV.

Here, codepoints (00, 01, 10, 11) of a given field of the DCI are associated with the repetition factor candidates {R0, R1, R2, R3}. The association between the codepoint (for example, L1 codepoint) of the given field and the repetition factor may be controlled so as to correspond to each codepoint (00, 01, 10, 11) in the order of R0, R1, R2, and R3 configured by higher layer signaling (see Fig. 3). Note that, here, the case where the given field is 2 bits is illustrated, but the number of bits of the given field is not limited thereto.

When receiving the DCI used for scheduling the physical shared channel, the UE determines a repetition factor to be applied to the physical shared channel based on the codepoint of the given field of the DCI.

For example, when the codepoint of the given field of the DCI used for scheduling the PDSCH is 10, the UE controls the reception processing assuming that the repetition factor K = 4 is applied to the PDSCH. Further, when the codepoint of the given field of the DCI used for scheduling the PUSCH is 01, the UE controls the transmission processing assuming that the repetition factor K = 2 is applied to the PUSCH.

As described above, by enabling notification of a plurality of repetition factors using a given field of the DCI, it is possible to flexibly configure the repetition factor according to the designated SLIV.

In the above description, the case where the repetition factor candidates {R0, R1, R2, R3} are commonly configured for all the SLIVs has been described, but it is not limited thereto. Repetition factor candidates may be commonly configured for some SLIV groups. Alternatively, repetition factor candidates may be configured for each SLIV in which at least one of S and L is different.

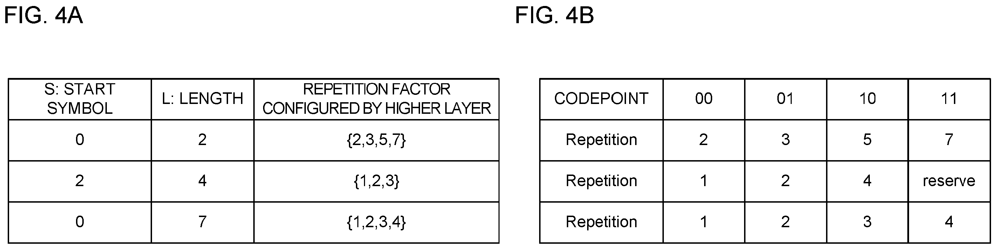

Fig. 4A illustrates an example of repetition factor candidates configured separately (or independently) for each SLIV in which at least one of S and L is different. Here, four repetition factor candidates {R0, R1, R2, R3} (R0 = 2, R1 = 3, R2 = 5, R3 = 7) are configured for first SLIV (S = 0, L = 2). Further, three repetition factor candidates {R0, R1, R2} (R0 = 1, R1 = 2, R2 = 3) are configured for a second SLIV (S = 2, L = 4). Further, four repetition factor candidates {R0, R1, R2, R3} (R0 = 1, R1 = 2, R2 = 3, R3 = 4) are configured for a third SLIV (S = 0, L = 7).

The network (for example, a base station) may notify the UE of the information regarding the repetition factor candidate corresponding to each SLIV by using higher layer signaling. The SLIV for which the repetition factor candidate is configured may be determined based on at least one of S or L. For example, a repetition factor candidate may be configured for each L. Further, at least one of the number and value of repetition factor candidates may be separately configured for each SLIV. Thus, the repetition factor can be flexibly configured according to the SLIV (at least one of S and L).

The association between the codepoint (for example, L1 codepoint) of the given field of the DCI and the repetition factor may be controlled so as to correspond to each codepoint (00, 01, 10, 11) in the order of R0, R1, R2, and R3 configured by higher layer signaling (see Fig. 4B).

When receiving the DCI used for scheduling the physical shared channel, the UE determines a repetition factor to be applied to the physical shared channel based on the codepoint of the given field of the DCI. Note that, in a case where a repetition factor candidate is configured for each of a plurality of SLIVs, the UE may determine a repetition factor candidate that can be designated in the given field based on the SLIV designated by the DCI.

For example, in a case where the codepoint of the given field of the DCI used for scheduling the PDSCH is 10, K = 3 or 5 is considered as the repetition factor. In this case, when the SLIV designated by the DCI is the first SLIV (S = 0, L = 2), it is determined that the repetition factor K to be applied is K = 5. On the other hand, when the SLIV designated by the DCI is the second SLIV (S = 2, L = 4) or the third SLIV (S = 0, L = 7), it is determined that the repetition factor K to be applied is K = 3.

That is, the UE determines, based on a first field (for example, a field designating an SLIV) included in the DCI, a repetition factor candidate that can be designated in a second field (for example, a field designating a repetition factor), and determines, based on the codepoint of the second field, the repetition factor to be applied.

As described above, by separately configuring the repetition factor candidate for each of the plurality of SLIVs, the repetition factor can be flexibly configured according to the SLIV. Thus, the communication throughput can be improved.

### (Second Aspect)

A second aspect describes configuration of a repetition factor in RRC reconfiguration (RRC reconfig).

In a case where the RRC reconfiguration is performed, it is difficult to configure the repetition factor candidate using higher layer signaling in the period of the RRC reconfiguration. In such a case, repetition factor candidates (for example, a correspondence relationship between an SLIV and a repetition factor candidate) configured for the UE become unclear, and there is a possibility that the repetition factor cannot be commonly recognized between the UE and the base station.

Therefore, in the second aspect, the notification of the repetition factor using the downlink control information may not be performed in the period of the RRC reconfiguration. For example, the DCI notifying the repetition factor may be limited to a given DCI format (for example, the UE-specific DCI format). The UE-specific DCI format may be, for example, non-fallback DCI in Rel. 15, or DCI in Rel. 15 or Rel. 16 in UE-specific search space (USS).

That is, control may be performed such that a notification of the repetition factor using DCI (for example, fallback DCI, DCI in common search space (CSS), and the like) to which a format other than the UE-specific DCI format is applied is not given. In the period of the RRC reconfiguration, since a DCI format to which a format other than the UE-specific DCI format is applied is transmitted to the UE, it is possible to control not to give a notification of the repetition factor in the period of the RRC reconfiguration.

Alternatively, the value of the repetition factor candidate to be reconfigured may be set to a given value (or the UE may assume that a given value is set) in the period of the RRC reconfiguration. For example, a specific value (for example, 1) may be set for a given codepoint (for example, Lowest codepoint) of a given field of the DCI. The UE may determine the repetition factor assuming that the given codepoint designated in the given field of the DCI is a specific value in the period of the RRC reconfiguration.

Thus, the repetition factor can be commonly recognized between the UE and the base station even in the period of the RRC reconfiguration. Thus, the repetition in the period of the RRC reconfiguration can be appropriately performed.

### (Third Aspect)

A third aspect describes configuration of a repetition factor for UL transmission for which the transmission is configured (or activated) by the DCI.

Dynamic grant-based transmission and configured grant-based transmission have been studied for UL transmission of NR.

The dynamic grant-based transmission is a method of performing the UL transmission by using an uplink shared channel (for example, physical uplink shared channel (PUSCH)) based on a dynamic UL grant (dynamic grant).

The configured grant-based transmission is a method of performing the UL transmission by using an uplink shared channel (for example, PUSCH) based on UL grant (which may be referred to as, for example, configured grant, configured UL grant, or the like) configured by a higher layer. In the configured grant-based transmission, a UL resource is already allocated to the UE, and the UE can perform UL transmission on its own initiative by using the configured resource, and thus implementation of low latency communication can be expected.

The dynamic grant-based transmission may be referred to as a dynamic grant-based PUSCH, UL transmission with dynamic grant, PUSCH with dynamic grant, UL transmission with UL grant, UL grant-based transmission, UL transmission scheduled (for which a transmission resource is configured) by dynamic grant, and the like.

The configured grant-based transmission may be referred to as a configured grant-based PUSCH, UL transmission with configured grant, PUSCH with configured grant, UL transmission without UL grant, UL grant-free transmission, UL transmission scheduled (for which a transmission resource is configured) by configured grant, and the like.

Further, the configured grant-based transmission may be defined as one type of UL semi-persistent scheduling (SPS). In the present disclosure, "configured grant" may mutually be replaced with "SPS", "SPS/configured grant", and the like.

Several types (type 1, type 2, and the like) have been studied for the configured grant-based transmission.

In configured grant type 1 transmission (type 1 configured grant), parameters (which may be referred to as configured grant-based transmission parameters, configured grant parameters, or the like) used for the configured grant-based transmission are configured in the UE with use of only higher layer signaling.

In configured grant type 2 transmission (type 2 configured grant), the configured grant parameters are configured in the UE by higher layer signaling. In the configured grant type 2 transmission, a notification of at least some of the configured grant parameters may be given to the UE by physical layer signaling (for example, downlink control information (DCI) for activation described later).

The configured grant parameters may be configured in the UE with use of a ConfiguredGrantConfig information element of RRC. The configured grant parameters may include, for example, information specifying a configured grant resource. The configured grant parameters may include information regarding, for example, an index of the configured grant, a time offset, periodicity, the number of times of repetition of a transport block (TB) (the number of times of repetition may be expressed as K), a redundancy version (RV) sequence used in the repetition, the above-described timer, and the like.

When the configured grant type 2 transmission is configured and a notification of a given activation signal is given, the UE may determine that one or a plurality of configured grants is triggered (or activated). The given activation signal (for example, activation DCI) may be DCI (PDCCH) scrambled by a cyclic redundancy check (CRC) with a given identifier (for example, configured scheduling RNTI (CS-RNTI)). Note that the DCI may be used for control of deactivation, retransmission, or the like of the configured grant.

### <Notification of Repetition Factor>

A notification of the repetition factor may be dynamically given for configured grant-based uplink shared channel (for example, type 2) transmission. That is, similarly to the PDSCH or the like, a notification of the dynamic repetition factor may be applied to the configured grant-based PUSCH transmission.

As described in the first aspect, one or more repetition factor candidates are configured by higher layer signaling, and downlink control information (DCI) is, as claimed, used to give a notification of a specific repetition factor. The DCI used for notification of the repetition factor is at least one of DCI for activating the configured grant-based PUSCH (this is claimed), DCI for scheduling the dynamic grant-based PUSCH (this is claimed), and DCI for scheduling the PDSCH.

Further, when a repetition factor is designated for the configured grant-based PUSCH transmission, the repetition factor parameter may be configured to be common between the dynamic grant-based PUSCH (dynamic PUSCH) and the configured grant-based PUSCH (CG Type 2).

For example, as described in the first aspect, it is assumed that the repetition factor candidate is configured by higher layer signaling for a given SLIV. In such a case, the correspondence relationship between the SLIV and the repetition factor candidate configured by a higher layer may be commonly applied between the dynamic grant-based PUSCH and the configured grant-based PUSCH. In this case, the correspondence relationship between the SLIV and the repetition factor candidate may be configured in the UE by using at least one of a higher layer parameter (for example, PUSCH-Config) for configuring the parameter of the dynamic grant-based PUSCH and a higher layer parameter (for example, COnfiguredGrantconfig) for configuring the configured grant-based parameter.

The UE may apply the correspondence relationship between the SLIV and the repetition factor candidate configured by any one of the higher layer parameters to the dynamic grant-based and configured grant-based PUSCH repetition. Thus, signaling overhead of the higher layer parameter for the UE can be reduced.

Alternatively, the correspondence relationship between the SLIV and the repetition factor candidate configured by a higher layer may be separately configured for the dynamic grant-based PUSCH and the configured grant-based PUSCH. In this case, the correspondence relationship between the SLIV and the repetition factor candidate applied to the dynamic grant-based PUSCH repetition may be configured in the UE by a higher layer parameter (for example, PUSCH-Config) for configuring the parameter of the dynamic grant-based PUSCH.

On the other hand, the correspondence relationship between the SLIV and the repetition factor candidate applied to the configured grant-based PUSCH repetition may be configured in the UE by a higher layer parameter (for example, COnfiguredGrantconfig) for configuring the configured grant-based parameter. Thus, since the correspondence relationship between the SLIV and the repetition factor can be separately configured for the dynamic grant-based PUSCH and the configured grant-based PUSCH, it is possible to more flexibly perform the repetition.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

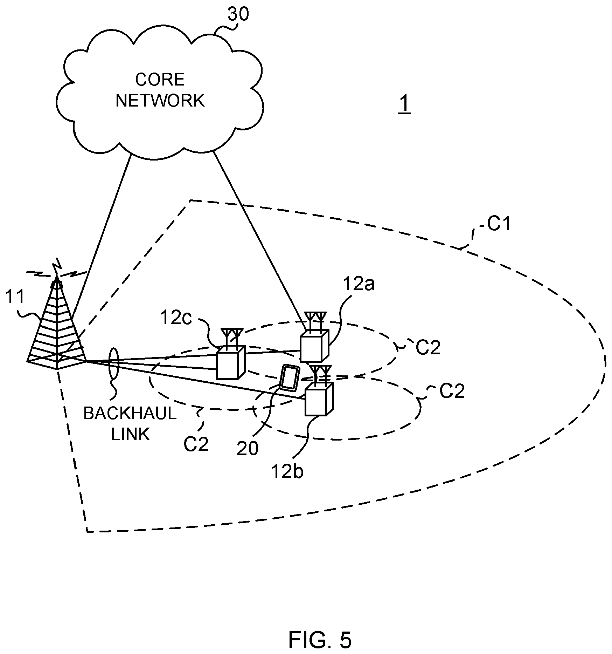

Fig. 5 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. User terminal 20 may be located in at least one cell. The arrangement, number, and the like of cells and the user terminal 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by each user terminal 20, a broadcast channel (physical broadcast channel (PBCH)), a downlink control channel (physical downlink control channel (PDCCH)), and the like may be used as downlink channels.

Further, in the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information for at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, the DMRS may be referred to as a user terminal-specific reference signal (UE-specific Reference Signal).

### (Base station)

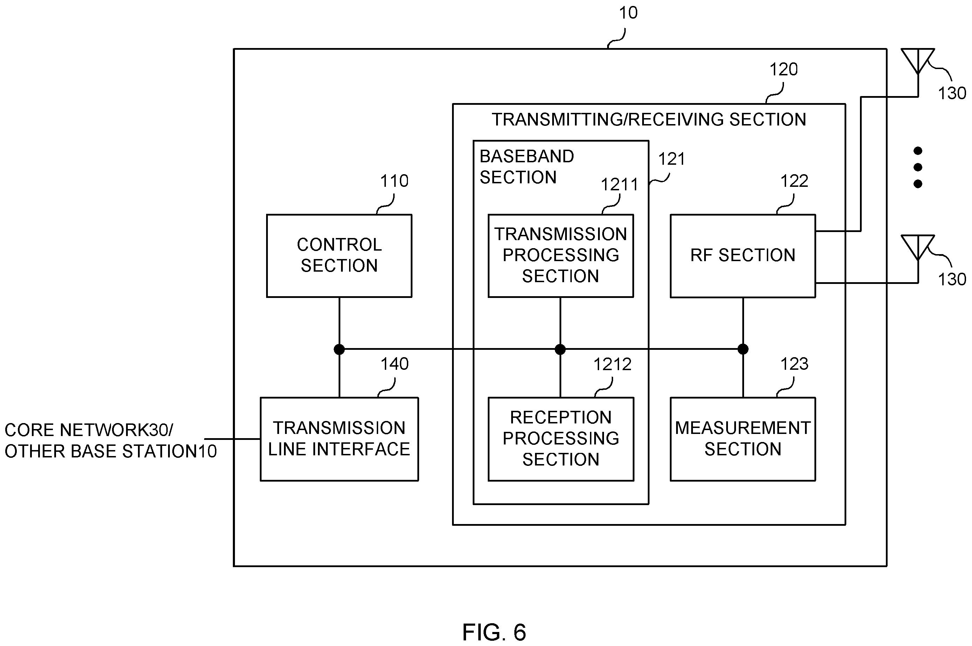

Fig. 6 is a diagram illustrating an example of a configuration of a base station according to one embodiment. The base station 10 includes a control section 110, a transmission/reception section 120, a transmission/reception antenna 130, and a transmission line interface 140. Note that one or more of the control sections 110, one or more of the transmission/reception sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmission/reception section 120, the transmission/reception antenna 130, and the transmission line interface 140. The control section 110 may generate data to be transmitted as a signal, control information, a sequence, and the like, and may transfer the data, the control information, the sequence, and the like to the transmission/reception section 120. The control section 110 may perform call processing (such as configuration or release) of a communication channel, management of the state of the base station 10, and management of a radio resource.

The transmission/reception section 120 may include a baseband section 121, a radio frequency (RF) section 122, and a measurement section 123. The baseband section 121 may include a transmission processing section 1211 and a reception processing section 1212. The transmission/reception section 120 can be constituted by a transmitter/receiver, an RF circuit, a baseband circuit, a filter, a phase shifter, a measurement circuit, a transmission/reception circuit, or the like, which is described based on common recognition in the technical field to which the present disclosure relates.

The transmission/reception section 120 may be constituted as an integrated transmission/reception section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmission/reception antenna 130 can be constituted by an antenna, which is described based on common recognition in the technical field to which the present disclosure relates, for example, an array antenna.

The transmission/reception section 120 may transmit the above-described downlink channel, synchronization signal, downlink reference signal, and the like. The transmission/reception section 120 may receive the above-described uplink channel, uplink reference signal, and the like.

The transmission/reception section 120 may form at least one of a Tx beam and a reception beam by using digital beam forming (for example, precoding), analog beam forming (for example, phase rotation), and the like.

The transmission/reception section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmission/reception section 120 (transmission processing section 1211) may perform transmission processing such as channel encoding (which may include error correcting coding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmission/reception section 120 (RF section 122) may perform modulation to a radio frequency band, filtering processing, amplification, and the like on the baseband signal, and may transmit a signal in the radio frequency band via the transmission/reception antenna 130.

Meanwhile, the transmission/reception section 120 (RF section 122) may perform amplification, filtering processing, demodulation to a baseband signal, and the like on the signal in the radio frequency band received by the transmission/reception antenna 130.

The transmission/reception section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correcting decoding), MAC layer processing, RLC layer processing, or PDCP layer processing on the acquired baseband signal to acquire user data and the like.

The transmission/reception section 120 (measurement section 123) may perform measurement on the received signal. For example, the measurement section 123 may perform radio resource management (RRM) measurement, channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), or a signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmission/reception section 120, the transmission/reception antenna 130, and the transmission line interface 140.

Note that the transmission/reception section 120 transmits information regarding one or more repetition factor candidates configured corresponding to the time domain resource (for example, at least one of S and L of SLIV) allocated to the physical shared channel (for example, at least one of the PUSCH and the PDSCH).

The control section 110 may control the value of the codepoint of the given field included in the downlink control information used for scheduling the physical shared channel based on the SLIV allocated to the physical shared channel.

### (User terminal)

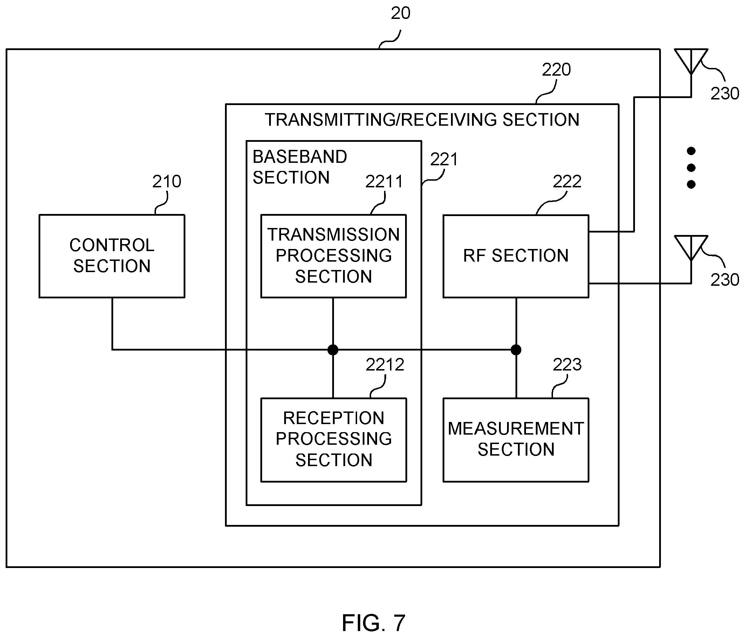

Fig. 7 is a diagram illustrating an example of a configuration of user terminal according to one embodiment. The user terminal 20 includes a control section 210, a transmission/reception section 220, and a transmission/reception antenna 230. Note that one or more of the control sections 210, one or more of the transmission/reception sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmission/reception section 220 and the transmission/reception antenna 230. The control section 210 may generate data to be transmitted as a signal, control information, a sequence, and the like, and may transfer the data, the control information, the sequence, and the like to the transmission/reception section 220.

The transmission/reception section 220 may include a baseband section 221, an RF section 222, and a measurement section 223. The baseband section 221 may include a transmission processing section 2211 and a reception processing section 2212. The transmission/reception section 220 can be constituted by a transmitter/receiver, an RF circuit, a baseband circuit, a filter, a phase shifter, a measurement circuit, a transmission/reception circuit, or the like, which is described based on common recognition in the technical field to which the present disclosure relates.

The transmission/reception section 220 may be constituted as an integrated transmission/reception section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmission/reception antenna 230 can be constituted by an antenna, which is described based on common recognition in the technical field to which the present disclosure relates, for example, an array antenna.

The transmission/reception section 220 may receive the above-described downlink channel, synchronization signal, downlink reference signal, and the like. The transmission/reception section 220 may transmit the above-described uplink channel, uplink reference signal, and the like.

The transmission/reception section 220 may form at least one of a Tx beam and a reception beam by using digital beam forming (for example, precoding), analog beam forming (for example, phase rotation), and the like.

The transmission/reception section 220 (transmission processing section 2211) may perform PDCP layer processing, RLC layer processing (for example, RLC retransmission control), MAC layer processing (for example, HARQ retransmission control), and the like, for example, on data or control information acquired from the control section 210 to generate a bit string to be transmitted.

The transmission/reception section 220 (transmission processing section 2211) may perform transmission processing such as channel encoding (which may include error correcting coding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmission/reception section 220 (transmission processing section 2211) may perform DFT processing as the transmission processing in order to transmit the channel using a DFT-s-OFDM waveform, and when it is not the case, DFT processing may not be performed as the transmission processing.

The transmission/reception section 220 (RF section 222) may perform modulation to a radio frequency band, filtering processing, amplification, and the like on the base band signal, and may transmit a signal in the radio frequency band via the transmission/reception antenna 230.

Meanwhile, the transmission/reception section 220 (RF section 222) may perform amplification, filtering processing, demodulation to a base band signal, and the like on the signal in the radio frequency band received by the transmission/reception antenna 230.

The transmission/reception section 220 (reception processing section 2212) may apply reception processing such as analog-digital transform, FFT processing, IDFT processing (if necessary), filtering processing, demapping, demodulation, decoding (which may include error correcting decoding), MAC layer processing, RLC layer processing, or PDCP layer processing on the acquired baseband signal to acquire user data and the like.

The transmission/reception section 220 (measurement section 223) may perform measurement regarding the received signal. For example, the measurement section 223 may perform RRM measurement, CSI measurement, and the like based on the received signal. The measurement section 223 may measure received power (e.g., RSRP), received quality (e.g., RSRQ, SINR, or SNR), signal strength (e.g., RSSI), propagation path information (e.g., CSI), and the like. The measurement result may be output to the control section 210.

Note that the transmission section and the reception section of the user terminal 20 in the present disclosure may be constituted by at least one of the transmission/reception section 220 and the transmission/reception antenna 230.

Note that the transmission/reception section 220 receives information regarding one or more repetition factor candidates configured corresponding to the time domain resource (for example, at least one of S and L of SLIV) allocated to the physical shared channel (for example, at least one of the PUSCH and the PDSCH).

The control section 210 may select (or determine) a specific repetition factor candidate based on a codepoint of a given field included in downlink control information used for scheduling the physical shared channel. At least one of the number and value of repetition factor candidates may be separately configured for different time domain resources.

The control section 210 may determine a repetition factor candidate that can be designated in a given field based on the time domain resource of the physical shared channel designated by the downlink control information. A user terminal-specific format may be applied to the downlink control information.

When transmitting the configured grant-based uplink shared channel based on given downlink control information, the control section 210 may control the repetition of the configured grant-based uplink shared channel based on a codepoint of a given field included in the given downlink control information.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, wireless, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

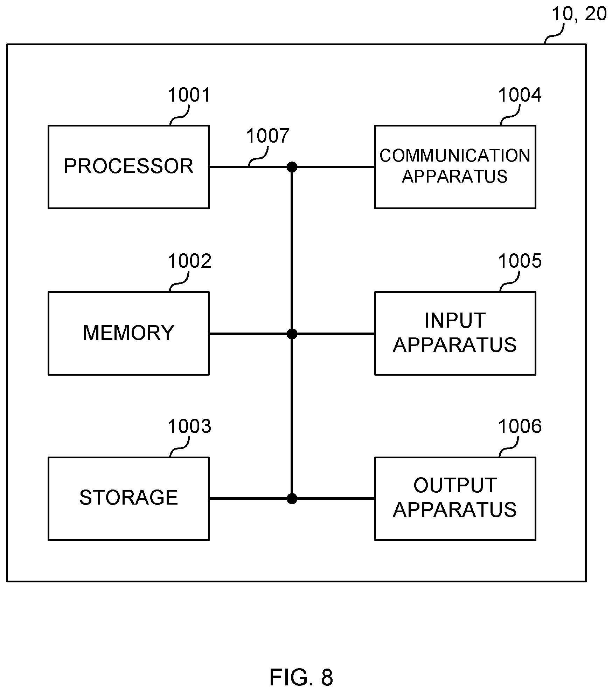

For example, the base station, the user terminal, and the like according to one embodiment of the present disclosure may function as a computer that executes the processing of the radio communication method of the present disclosure. Fig. 8 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is shown, a plurality of processors may be provided. Further, the processing may be executed by one processor, or the processing may be executed in sequence or using other different methods simultaneously by two or more processors. Note that the processor 1001 may be implemented with one or more chips.

Each of functions of the base station 10 and the user terminal 20 is implemented by causing predetermined software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, running an operating system. As the processor 1001, provided may be a central processing unit (CPU) including an interface with peripheral equipment, a control device, an operation device, a register, and the like. For example, at least a part of the above-described control section 110(210), transmission/reception section 120(220), and the like may be implemented by the processor 1001.

Further, the processor 1001 reads programs (program codes), software modules, or data, from at least one of the storage 1003 and the communication apparatus 1004, into the memory 1002, and executes various processing according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be constituted by, for example, at least one of a read only memory (ROM), an erasable programmable ROM (EPROM), an electrically EPROM (EEPROM ), a random access memory (RAM) and other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmitting/receiving device) for allowing inter-computer communication by using at least one of a wired network and a wireless network, and may be referred to as, for example, a network device, a network controller, a network card, a communication module, and the like. The communication apparatus 1004 may be constituted by a high frequency switch, a duplexer, a filter, a frequency synthesizer, and the like in order to implement, for example, at least one of frequency division duplex (FDD) and time division duplex (TDD). For example, the transmission/reception section 120(220), the transmission/reception antenna 130(230), and the like described above may be implemented by the communication apparatus 1004. The transmission/reception section 120(220) may be implemented by physically or logically separating a transmission section 120a(220a) and a reception section 120b(220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (e.g., a display, a speaker, a light emitting diode (LED) lamp, and the like). Note that the input apparatus 1005 and the output apparatus 1006 may be provided in an integrated configuration (for example, a touch panel).

Further, the apparatuses such as the processor 1001 and the memory 1002 are connected by the bus 1007 for communicating information. The bus 1007 may be configured with a single bus, or may be configured with different buses between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be read interchangeably. Further, the signal may be a message. The reference signal can be abbreviated as an RS, and may be referred to as a pilot, a pilot signal and the like, depending on which standard applies. Further, a component carrier (CC) may be referred to as a cell, a frequency carrier, a carrier frequency, and the like.

A radio frame may include one or a plurality of periods (frames) in a time domain. Each of the one or plurality of periods (frames) constituting the radio frame may be referred to as a subframe. Furthermore, a subframe may include one or a plurality of slots in the time domain. The subframe may be a fixed time length (e.g., 1 ms) that does not depend on numerology.

Here, numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may be constituted by one or a plurality of symbols in the time domain (orthogonal frequency division multiplexing (OFDM) symbols, single carrier frequency division multiple access (SC-FDMA) symbols, and the like). Further, the slot may be a time unit based on numerology.

A slot may include a plurality of mini slots. Each mini slot may be constituted by one or a plurality of symbols in the time domain. Further, the mini slot may be referred to as a subslot. The mini slot may be constituted by fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot and a symbol all represent the time unit in signal communication. A radio frame, a subframe, a slot, a mini slot, and a symbol may be each called by other applicable names. Note that the time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (e.g., one to thirteen symbols), or may be a period longer than 1 ms. Note that the unit to represent the TTI may be referred to as a slot, a mini slot or the like, instead of a subframe.

Here, TTI refers to, for example, the minimum time unit of scheduling in radio communication. For example, in the LTE system, a base station performs scheduling to allocate radio resources (a frequency bandwidth and transmission power that can be used in each user terminal and the like) to each user terminal in TTI units. Note that the definition of the TTI is not limited to this.

The TTI may be the transmission time unit of channel-encoded data packets (transport blocks), code blocks, codewords, or the like, or may be the unit of processing in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as the TTI, one or more TTIs (that is, one or more slots or one or more mini slots) may be the minimum time unit of scheduling. Further, the number of slots (the number of mini slots) constituting the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that the long TTI (e.g., usual TTI and subframe) may be replaced with a TTI having a time length more than 1 ms, and the short TTI (e.g., shortened TTI) may be replaced with a TTI having a TTI length less than the TTI length of the long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on the numerology.

Further, the RB may include one or a plurality of symbols in the time domain, and may have a length of one slot, one mini slot, one subframe, or one TTI. One TTI, one subframe, and the like each may be constituted by one or a plurality of resource blocks.

Note that one or a plurality of RBs may be referred to as a physical resource block (Physical RB (PRB)), a subcarrier group (SCG), a resource element group (REG), a PRB pair, an RB pair, and the like.

Further, a resource block may be constituted by one or a plurality of resource elements (REs). For example, one RE may be a radio resource domain of one subcarrier and one symbol.

The bandwidth part (BWP) (which may be referred to as a partial bandwidth and the like) may represent a subset of consecutive common resource blocks (RB) for certain numerology in a certain carrier. Here, the common RB may be specified by the index of the RB based on a common reference point of the carrier. The PRB may be defined in a certain BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and the UE may not assume that a predetermined signal/channel is transmitted and received outside the active BWP. Note that a "cell", a "carrier", or the like in the present disclosure may be replaced with the "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to predetermined values, or may be represented using other corresponding information. For example, a radio resource may be instructed by a predetermined index.

The names used for parameters and the like in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signal, and the like to be input and/or output can be overwritten, updated or appended. The output information, signal, and the like may be deleted. The information, signals, and the like that are input may be transmitted to another apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, a notification of MAC signaling may be given using, for example, MAC control elements (MAC control elements (CEs)).

Further, a notification of given information (for example, notification of "being X") is not limited to explicit notification but may be performed implicitly (for example, by not performing notification of the given information or by performing notification of another piece of information).

Determination may be made in a value represented by one bit (0 or 1), may be made in a Boolean value that represents true or false, or may be made by comparing numerical values (e.g., comparison against a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When a base station accommodates a plurality of cells, the entire coverage area of the base station can be partitioned into a plurality of smaller areas, and each smaller area can provide communication service through base station subsystems (e.g., indoor small base stations (remote radio heads (RRHs))). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be interchangeably used.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and the mobile station may be referred to as a transmission apparatus, a reception apparatus, a radio communication apparatus, and the like. Note that at least one of the base station and the mobile station may be a device mounted on a moving body, a moving body itself, and the like. The moving body may be a transportation (for example, a car, an airplane and the like), an unmanned moving body (for example, a drone, an autonomous car, and the like), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may be configured to have the functions of the base station 10 described above. Further, terms such as "uplink" and "downlink" may be replaced with terms corresponding to communication between terminals (for example, "side"). For example, an uplink channel, a downlink channel, and the like may be interpreted as a side channel.

Similarly, the user terminal in the present disclosure may be replaced with a base station. In this case, the base station 10 may be configured to have the above-described functions of the user terminal 20

In the present disclosure, the operation performed by the base station may be performed by an upper node thereof in some cases. In a network including one or a plurality of network nodes with base stations, it is clear that various operations performed for communication with a terminal can be performed by a base station, one or a plurality of network nodes (examples of which include but are not limited to mobility management entity (MME) and serving-gateway (S-GW)) other than the base station, or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Further, "determining" may be regarded as "determining" of receiving (for example, receiving of information), transmitting (for example, transmitting of information), input, output, accessing (for example, accessing to data in a memory), and the like.

Further, "determining" may be regarded as "determining" of resolving, selecting, choosing, establishing, comparing, and the like. In other words, "determining" may be regarded as "determining" of a certain operation.

Further, "determining" may be replaced with "assuming", "expecting", "considering", and the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "leave", "coupled", and the like may be interpreted in a manner similar to the way the term "different" is used.

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

## Claims

1. A terminal (20) comprising:
a receiving section (220) configured to receive at least one of first downlink control information scheduling a first uplink shared channel and second downlink control information used for activation of a second uplink shared channel transmission; and
a control section (210) configured to determine, based on repetition number candidates configured by a first higher layer parameter for a time domain resource of a an uplink shared channel configuration, a number of repetitions of the first uplink shared channel and a number of repetitions of the second uplink shared channel;
wherein the control section (210) is notified, by the first downlink control information, of the number of repetitions of the first uplink shared channel from among the repetition number candidates, and
the control section (210) is notified, by the second downlink control information, of the number of repetitions of the second uplink shared channel from among the repetition number candidates.

2. The terminal according to claim 1, wherein the control section (210) is further configured to control a repetition of the second uplink shared channel transmission, based on the first higher layer parameter, the second downlink control information and a second higher layer parameter.

3. The terminal (20) according to claim 1, wherein the repetition number candidates are commonly configured for the first uplink shared channel and the second uplink shared channel.

4. A radio communication method for a terminal (20), comprising:
receiving at least one of first downlink control information scheduling a first uplink shared channel and second downlink control information used for activation of a second uplink shared channel transmission;
determining, based on repetition number candidates configured by a first higher layer parameter for a time domain resource of a an uplink shared channel configuration, a number of repetitions of the first uplink shared channel and a number of repetitions of the second uplink shared channel;
wherein the terminal (20) is notified, by the first downlink control information, of the number of repetitions of the first uplink shared channel from among the repetition number candidates, and
the terminal (20) is notified, by the second downlink control information, of the number of repetitions of the second uplink shared channel from among the repetition number candidates.

5. A base station (10) comprising:
a transmitting section (120) configured to transmit at least one of first downlink control information scheduling a first uplink shared channel and second downlink control information used for activation of a second uplink shared channel transmission;
a control section (110) configured to control, based on repetition number candidates configured by a first higher layer parameter for a time domain resource of a an uplink shared channel configuration, a number of repetitions of the first uplink shared channel and a number of repetitions of the second uplink shared channel;
wherein the control section (110) notifies, via the first downlink control information, the number of repetitions of the first uplink shared channel from among the repetition number candidates, and
the control section (110) notifies, via the second downlink control information, the number of repetitions of the second uplink shared channel from among the repetition number candidates.

6. A system comprising a terminal (20) according to any one of claims 1 to 3, and a base station (10) according to claim 5.

## Patentansprüche

1. Endgerät (20), umfassend:
einen Empfangsabschnitt (220), der so konfiguriert ist, dass er mindestens eines empfängt von einer ersten Abwärtsverbindungssteuerinformation, die einen ersten gemeinsamen Aufwärtsverbindungskanal plant, und einer zweiten Abwärtsverbindungssteuerinformation, die zur Aktivierung einer Übertragung auf einem zweiten gemeinsamen Aufwärtsverbindungskanal verwendet wird; und
einen Steuerabschnitt (210), der so konfiguriert ist, dass er basierend auf Wiederholungsanzahlkandidaten, die durch einen ersten Parameter höherer Schicht für eine Zeitbereichsressource einer gemeinsamen Aufwärtsverbindungskanalkonfiguration konfiguriert sind, eine Anzahl von Wiederholungen des ersten gemeinsamen Aufwärtsverbindungskanals und eine Anzahl von Wiederholungen des zweiten gemeinsamen Aufwärtsverbindungskanals bestimmt;
wobei dem Steuerabschnitt (210) durch die erste Abwärtsverbindungssteuerinformation die Anzahl von Wiederholungen des ersten gemeinsamen Aufwärtsverbindungskanals unter den Wiederholungsanzahlkandidaten mitgeteilt wird, und
den Steuerabschnitt (210) durch die zweite Abwärtsverbindungssteuerinformation die Anzahl von Wiederholungen des zweiten gemeinsamen Aufwärtsverbindungskanals unter den Wiederholungsanzahlkandidaten mitgeteilt wird.

2. Endgerät nach Anspruch 1, wobei der Steuerabschnitt (210) weiter so konfiguriert ist, dass er eine Wiederholung der Übertragung auf dem zweiten gemeinsamen Aufwärtsverbindungskanal basierend auf dem ersten Parameter höherer Schicht, der zweiten Abwärtsverbindungssteuerinformation und einem zweiten Parameter höherer Schicht steuert.

3. Endgerät (20) nach Anspruch 1, wobei die Wiederholungsanzahlkandidaten für den ersten gemeinsamen Aufwärtsverbindungskanal und den zweiten gemeinsamen Aufwärtsverbindungskanal gemeinsam konfiguriert sind.

4. Funkkommunikationsverfahren für ein Endgerät (20), umfassend:
Empfangen von mindestens einem von einer ersten Abwärtsverbindungssteuerinformation, die einen ersten gemeinsamen Aufwärtsverbindungskanal plant, und einer zweiten Abwärtsverbindungssteuerinformation, die zur Aktivierung einer Übertragung auf einem gemeinsamen Aufwärtsverbindungskanal verwendet wird;
basierend auf Wiederholungsanzahlkandidaten, die durch einen ersten Parameter höherer Schicht für eine Zeitbereichsressource
als eine gemeinsame Aufwärtsverbindungskanalkonfiguration konfiguriert sind, Bestimmen einer Anzahl von Wiederholungen des ersten gemeinsamen Aufwärtsverbindungskanals und einer Anzahl von Wiederholungen des zweiten gemeinsamen Aufwärtsverbindungskanals;
wobei dem Endgerät (20) durch die erste Abwärtsverbindungssteuerinformation die Anzahl von Wiederholungen des ersten gemeinsamen Aufwärtsverbindungskanals unter den Wiederholungsanzahlkandidaten mitgeteilt wird, und
dem Endgerät (20) durch die zweite Abwärtsverbindungssteuerinformation die Anzahl von Wiederholungen des zweiten gemeinsamen Aufwärtsverbindungskanals unter den Wiederholungsanzahlkandidaten mitgeteilt wird.

5. Basisstation (10), umfassend:
einen Übertragungsabschnitt (120), der so konfiguriert ist, dass er mindestens eines überträgt von einer ersten Abwärtsverbindungssteuerinformation, die einen ersten gemeinsamen Aufwärtsverbindungskanal plant, und einer zweiten Abwärtsverbindungssteuerinformation, die zur Aktivierung einer Übertragung auf einem gemeinsamen Aufwärtsverbindungskanal verwendet wird; und
einen Steuerabschnitt (110), der so konfiguriert ist, dass er basierend auf Wiederholungsanzahlkandidaten, die durch einen ersten Parameter höherer Schicht für eine Zeitbereichsressource
als eine gemeinsame Aufwärtsverbindungskanalkonfiguration konfiguriert sind, eine Anzahl von Wiederholungen des ersten gemeinsamen Aufwärtsverbindungskanals und eine Anzahl von Wiederholungen des zweiten gemeinsamen Aufwärtsverbindungskanals bestimmt;
wobei dem Steuerabschnitt (110) über die erste Abwärtsverbindungssteuerinformation die Anzahl von Wiederholungen des ersten gemeinsamen Aufwärtsverbindungskanals unter den Wiederholungsanzahlkandidaten mitgeteilt wird, und
dem Steuerabschnitt (110) über die zweite Abwärtsverbindungssteuerinformation die Anzahl von Wiederholungen des zweiten gemeinsamen Aufwärtsverbindungskanals unter den Wiederholungsanzahlkandidaten mitgeteilt wird.

6. System, umfassend ein Endgerät (20) nach einem der Ansprüche 1 bis 3, und einen Basisstation (10) nach Anspruch 5.

## Revendications

1. Terminal (20) comprenant :
une section de réception (220) configurée pour recevoir au moins l'une parmi des premières informations de commande de liaison descendante planifiant un premier canal partagé en liaison montante et des secondes informations de commande de liaison descendante utilisées pour l'activation d'une seconde transmission de canal partagé en liaison montante ; et
une section de commande (210) configurée pour déterminer, sur la base de candidats de nombre de répétitions configurés par un premier paramètre de couche supérieure pour une ressource de domaine temporel d'une configuration de canal partagé en liaison montante, un nombre de répétitions du premier canal partagé en liaison montante et un nombre de répétitions du second canal partagé en liaison montante ;
dans lequel la section de commande (210) est notifiée, par les premières informations de commande de liaison descendante, du nombre de répétitions du premier canal partagé en liaison montante parmi les candidats de nombre de répétitions, et la section de commande (210) est notifiée, par les secondes informations de commande de liaison descendante, du nombre de répétitions du second canal partagé en liaison montante parmi les candidats de nombre de répétitions.

2. Terminal selon la revendication 1, dans lequel la section de commande (210) est en outre configurée pour commander une répétition de la seconde transmission de canal partagé en liaison montante, sur la base du premier paramètre de couche supérieure, des secondes informations de commande de liaison descendante et d'un second paramètre de couche supérieure.

3. Terminal (20) selon la revendication 1, dans lequel les candidats de nombre de répétitions sont configurés en commun pour le premier canal partagé en liaison montante et le second canal partagé en liaison montante.

4. Procédé de communication radio pour un terminal (20), comprenant :
la réception d'au moins l'une parmi des premières informations de commande de liaison descendante planifiant un premier canal partagé en liaison montante et des secondes informations de commande de liaison descendante utilisées pour l'activation d'une seconde transmission de canal partagé en liaison montante ;
la détermination, sur la base de candidats de nombre de répétitions configurés par un premier paramètre de couche supérieure pour une ressource de domaine temporel d'une configuration de canal partagé en liaison montante, d'un nombre de répétitions du premier canal partagé en liaison montante et d'un nombre de répétitions du second canal partagé en liaison montante ;
dans lequel le terminal (20) est notifié, par les premières informations de commande de liaison descendante, du nombre de répétitions du premier canal partagé en liaison montante parmi les candidats de nombre de répétitions, et
le terminal (20) est notifié, par les secondes informations de commande de liaison descendante, du nombre de répétitions du second canal partagé en liaison montante parmi les candidats de nombre de répétitions.

5. Station de base (10) comprenant :
une section de transmission (120) configurée pour transmettre au moins l'une parmi des premières informations de commande de liaison descendante planifiant un premier canal partagé en liaison montante et des secondes informations de commande de liaison descendante utilisées pour l'activation d'une seconde transmission de canal partagé en liaison montante ;
une section de commande (110) configurée pour commander, sur la base de candidats de nombre de répétitions configurés par un premier paramètre de couche supérieure pour une ressource de domaine temporel d'une configuration de canal partagé en liaison montante, d'un nombre de répétitions du premier canal partagé en liaison montante et d'un nombre de répétitions du second canal partagé en liaison montante ;
dans laquelle la section de commande (110) notifie, via les premières informations de commande de liaison descendante, le nombre de répétitions du premier canal partagé en liaison montante parmi les candidats de nombre de répétitions, et
la section de commande (110) notifie, via les secondes informations de commande de liaison descendante, le nombre de répétitions du second canal partagé en liaison montante parmi les candidats de nombre de répétitions.

6. Système comprenant un terminal (20) selon l'une quelconque des revendications 1 à 3, et une station de base (10) selon la revendication 5.
